# EUROPEAN PATENT SPECIFICATION

(11) **EP 2 013 669 B1**
(45) Date of publication and mention of the grant of the patent: **11.01.2012**
(21) Application number: 07728776.1
(22) Date of filing: 03.05.2007
(51) Int. Cl.: G05B 13/02

(54) **A METHOD OF OPTIMISING ENERGY CONSUMPTION**
VERFAHREN ZUM OPTIMIEREN DES ENERGIEVERBRAUCHS
PROCÉDÉ D'OPTIMISATION DE LA CONSOMMATION D'ÉNERGIE

(30) Priority: 03.05.2006 IE 20060346
(43) Date of publication of application: 14.01.2009
(73) Proprietor: Lightwave Technologies Limited, Belfield, Dublin 4 (IE)
(72) Inventor: MCNULTY, Nicholas, Dundrum, Dublin 14 (IE); PACKHAM, Ian, Stillorgan, County Dublin (IE); VANDERSTOCKT, Yann Daniel Edgard, 59264 Onnaing (FR); HAGRAS, Hani, Wivenhoe, Colchester CO7 9SD (GB); BYRNE, Martin, Terenure, Dublin 6 West (IE)
(74) Representative: O'Connor, Michael Donal
(86) International application number: PCT/EP2007/054323
(87) International publication number: WO 2007/128783

(56) References cited:
- US-A1- 2005 096 797
- US-A1- 2005 192 680

## Description

This invention relates to a method of optimising energy consumption in a building having a building management system (BMS), the BMS being used to monitor the environmental conditions of the building and control the heating and/or cooling system of the building. This invention further relates to a controller for carrying out such a method.

Throughout this specification, reference is made to a heating system. However, it will be understood that the heating system may be used to increase the temperature in a building and also may be used to decrease the temperature in a building, operating effectively as a cooling system. However, for simplicity, reference is made predominantly to a heating system and it will be understood that this invention applies equally to a cooling system and where reference is made to a heating system this is deemed to include a cooling system also. Furthermore, throughout the specification the invention is described with respect to a building, however, it will be understood that the invention equally applies to other structures such as ocean liners, cruising vessels, aircraft and other controlled environments and any reference to a building is intended to incorporate these other structures.

Building management systems have been in use for some time now and are typically found in a wide variety of buildings ranging in size from skyscrapers down to much smaller individual office blocks and personal dwellings. These building management systems are used to control various aspects of the building ranging from security access to certain areas of the building at certain times, the lighting of the building and more recently the heating and cooling system of the building. By having such a building management system, an operator will not have to manually turn the lighting and the heating on and off every day and set the temperature of the heating and cooling system each and every day. In the case of heating systems in office blocks in particular, the heating system will normally have to be turned on some time in advance of the normal working hours in order to ensure that the building is at a suitable temperature when the employees begin work. By using a building management system, an operator will not have to be on site many hours in advance of the other workers in order to determine when to start the heating system.

There are however, problems with the known building management systems: First of all, these building management systems are not intelligent systems and require direct input from an operator in order to operate. Although effective in starting and stopping the heating system at any given time in response to an operator's input, these systems by and large do not take account of other factors such as ambient temperature either inside the building or outside the building, the weather conditions of the day and the most economical way of achieving a particular desired temperature in the building. However, these can be very important factors and in many countries where the climate may be changeable from day to day with large changes in temperature from one day to the next, the known systems become relatively inefficient. For example, during winter months, in order to heat an office building up to a desired temperature, the building management system may be programmed to start the heating at 7.00am in the morning. However, this does not in any way take account of the fact that there may have been heavy snow fall the night before which will slow down the heating process and therefore the building will not be at the desired temperature by the time the employees begin their working day. Similarly, if there was a particularly mild winter's day and the ambient temperature outside the building is higher than normal, the heating may not have had to have been engaged until a later time after 7.00am thereby wasting valuable energy and resources. This problem is exacerbated by global warming whereby weather is becoming highly unpredictable and weather conditions that would be considered to be abnormal for a particular time of year are becoming more common.

Another problem with the known building management systems is that they do not allow the operator of the building management system to evaluate the actual cost of heating versus the comfort level of the employees. Furthermore, the known systems do not appear to appreciate that different heating requirements may apply in different floors in a building. For instance, in a tall skyscraper in a very warm climate, the air conditioning may have to be started earlier on the higher floors of the building than the lower floors of the building as the sun will affect the higher floors first as it rises over the horizon. Similarly, certain parts of the building may be exposed to direct sunlight at different times of the day requiring a different cooling strategy for those parts of the building. Currently, it is not possible to take that into account.

United States Patent Application Publication No. 2005/0192680 discloses a system for use with a building management system that optimises the set points used in the building management system using a modelling of the thermal plant in the building management system and an optimisation engine. The modelling may be carried out using classical modelling techniques or by artificial intelligence modelling techniques. The method uses the optimisation engine to iteratively arrive at a set of set points that minimises the operations costs of the thermal plant.

United States Patent Application Publication No. 2005/0096797 discloses a system of managing energy consumption within a building, the system comprising a data storage module for storing historical data relating to the facility; a calculation module for calculating the energy wasted based on the historical data stored in the data storage module; and a operation planning module that generates a plan for the building based on the energy wasted as calculated by the calculation module.

It is an object of the present invention to provide a method of optimising energy consumption in a building that overcomes at least some of these difficulties that is both simple to implement and cost effective to provide.

### Statements of Invention

According to the invention, there is provided a method of optimising energy consumption in a building having a building management system (BMS), the BMS being used to monitor the environmental conditions of the building and control the heating system of the building, the method comprising the steps of:
gathering the building environmental conditions data;
gathering weather data relevant to the building;
applying a plurality of intelligent control techniques to the building environmental conditions data and the weather data to provide an appropriate control input for the BMS; and
providing the appropriate control input to the BMS for subsequent implementation by the BMS
characterised in that the method comprises the intermediate steps of:
calculating a proposed BMS control input using each intelligent control technique;
determining the accuracy of the proposed BMS control input for each of the intelligent control techniques and thereafter determining an appropriate control input for the BMS.

By having such a method, it is possible to use information relating to the environmental conditions of the building such as the internal temperature along with weather data such as the outside temperature to determine the thermodynamic characteristics of the building (how the building behaves under varying external weather conditions) and in turn build up a thermodynamic profile of the building. It is then possible to accurately determine, using intelligent control techniques, when the optimised start-time, the optimised setpoint and the optimised stop time of the heating system should be in order to use the least amount of energy possible in order to achieve a desired temperature by a particular time. For example, during the summer, the heating system may not be programmed to come on until 8.00am in the morning, however, if it is a particularly cold morning where the temperature is well below normal levels for that time of year the method is able to take this into account and the intelligent control techniques each propose a BMS input, in this case the heating start time for the heating system at some time earlier than 8.00am. The intelligent control techniques may then be assessed for accuracy and an appropriate control input for the BMS may be derived therefrom. In this example, it may be determined that the heating system must be turned on by 7.42am in order to achieve the desired temperature by the time the employees begin their working day.

The step of gathering the building environmental conditions data from the BMS is essentially a pre-processing step of discovering the pertinent variables that cause the environmental changes to the building. It is important to make the distinction between this pre-processing step and the step of using the intelligent control techniques to make predictions, however the pre-processing step may itself use some intelligent control techniques. The invention may be summarised in a number of different ways, firstly in that it provides intelligent control based on historical data, secondly that it also provides intelligent control based on weather predictions and hence predictive control and finally it uses artificial intelligence techniques to establish the influence of major variables relevant to the proposed control suggestions sent to the BMS.

It is envisaged that at certain times of the year certain intelligent control techniques may be more efficient than others. Therefore, by having a plurality of intelligent control techniques, each determining an appropriate start time for the heating system, it is possible to evaluate the intelligent control techniques over time and use the most accurate of all the intelligent control techniques for that particular weather condition. For example, it may be found that one particular type of intelligent control technique may be particularly efficient during the winter months due to the various variables that it takes into account. However, the same intelligent control technique may be very ineffective during summer months. By having a number of intelligent control techniques, it is also possible to choose the best overall approximation of the start time, for example, of the heating and provide the appropriate control input for the BMS.

In another embodiment of the invention there is provided a method of optimising energy consumption in a building in which the step of applying the plurality of intelligent control techniques to the building environmental conditions data and the weather data comprises applying two or more of neural network (NN) techniques, genetic algorithm (GA) techniques and fuzzy logic (FL) techniques. These are seen as particularly useful intelligent control techniques to use. It is envisaged that by using these intelligent control techniques that each have a relatively small memory footprint, they may be implemented with existing building management systems in a relatively straightforward manner. Intelligent control techniques using NN, GA and FL also have the advantage that they can find relationships between two or more variables including finding patterns in data which is not possible using traditional BMS technologies based on Proportional, Integral and Derivative (PID) Control. FL systems can also be used to automatically find and generate "energy-saving" rules which are unique to any particular building and generic "energy-saving" rules that are general to all building environments.

In one embodiment of the invention there is provided a method of optimising energy consumption in a building in which the step of determining the accuracy of the intelligent control techniques further comprises the steps of:
comparing the current building environmental conditions data and weather data with historical data stored in a database;
determining the set of historical data that most closely matches the current building environmental conditions data and weather data; and
thereafter determining the accuracy of the intelligent control techniques based on the accuracy of the intelligent control techniques historically.

By carrying out such a method, it is possible to determine which of the intelligent control techniques was most accurate historically for a given set of weather conditions. It may be found that one particular intelligent control technique was highly accurate during winter months when snow was forecast. Therefore, this intelligent control technique may be preferred when the same weather conditions are being experienced.

In a further embodiment of the invention there is provided a method of optimising energy consumption in which the step of determining the appropriate control input for the BMS comprises using the intelligent control technique that is determined to be the most accurate for those conditions. Alternatively, the step of determining the appropriate control input for the building management system comprises generating a control input from a weighted average of a plurality of the intelligent control techniques with the weighting based on their historical accuracy. In other words, it is possible to take either the most accurate intelligent control technique response or to use a weighted average of a plurality of the intelligent control techniques so that an average result is taken with a high probability of accuracy.

In another embodiment of the invention there is provided a method of optimising energy consumption in a building in which the step of determining the accuracy of the intelligent control techniques further comprises minimisation of the error of each of the intelligent control techniques. By this, what is meant is determining the relative accuracy of the intelligent control up to a certain lower bound to avoid over-fitting or under-fitting of the model. This further avoids the possibility of over-training or under-training the neural networks. This is seen as a particularly efficient way of determining the accuracy of the intelligent control techniques and assisting in the selection of the appropriate intelligent control technique and hence the appropriate control input for the BMS.

In one embodiment of the invention there is provided a method of optimising energy consumption in a building in which the step of providing the appropriate control input to the BMS further comprises providing one or more of an optimal start time, an optimal stop time and a setpoint control.

In a further embodiment of the invention there is provided a method of optimising energy consumption in a building in which the BMS data and weather data are received over a network interface. Preferably, the network is the internet. such Alternatively, the network may be a network such as a Virtual Private Network which is IP based or a circuit-switched (PSTN) or other packet-switch network such as mobile 3G or GPRS networks. In this way, data may be received from external sources.

In another embodiment of the invention there is provided a method of optimising energy consumption in a building in which the intelligent control techniques are arranged in a cascaded manner. In this way, it is possible to have the intelligent control techniques used to control a large number of different components of the BMS. Furthermore, several different intelligent control techniques may be used to determine a particular control input.

In one embodiment of the invention there is provided a method of optimising energy consumption in a building in which the weather data comprises predicted weather data. Alternatively, or in addition to this, current weather data may be used. In this way, the method incorporates future weather conditions such as those forecast by a weather forecast service which may be retrieved over the internet or manually input in order to provide a strategy of the BMS and to provide accurate future inputs for the BMS.

In one embodiment of the invention there is provided a method of optimising energy consumption in a building in which the intelligent control techniques use recursive processing to determine control inputs to the BMS. The advantages of recursive processing are that a simple model can be created that can keep calling itself with minimal processing time, the number of "synthetic" variables required by a recursive method is lower than others because the model creates these values during processing, therefore the amount of pre-processing is also reduced before deployment.

In a further embodiment of the invention there is provided a method of optimising energy consumption in a building in which the step of determining an appropriate control input for the BMS from the intelligent control techniques further comprises using an adaptive decider to decide which intelligent control technique is to be used, the adaptive decider ranking each of the intelligent control techniques periodically.

In another embodiment of the invention, there is provided a controller for optimising energy consumption in a building having a heating system monitored and controlled by a building management system (BMS), the controller comprising:
means for receiving building environmental conditions and weather data relating to the building in which the controlled heating system operates;
a database for storing the building environmental conditions data and weather data therein;
a core processor having a plurality of intelligent control technique units, each of the intelligent control techniques units having means to receive building environmental conditions data and weather data and provide a proposed BMS control input;
characterised in that the core processor further comprises means to determine the accuracy of each of the intelligent control technique units and means to determine an appropriate control input for the BMS; and
the controller having means to transmit the appropriate control input to the BMS.

By building plant conditions data what is meant is boiler and chiller set-points, valve positions, AHP fan speed and the like.

In another embodiment of the invention there is provided a controller for optimising energy consumption in a building in which the plurality of intelligent control technique units comprise two or more of a fuzzy logic unit, a genetic algorithm unit and a neural network unit.

In a further embodiment of the invention there is provided a controller for optimising energy consumption in a building in which the means to determine the accuracy of each of the intelligent control techniques units comprises means to compare the current set of inputs with historical inputs stored in the database and determine which of the intelligent control technique units was most accurate historically.

In one embodiment of the invention there is provided a controller for optimising energy consumption in a building in which the core processors means to determine an appropriate control input for the BMS further comprises an adaptive decider.

In another embodiment of the invention there is provided a controller for optimising energy consumption in a heating system in which the adaptive decider has means to determine the most accurate proposed BMS control input received from the intelligent control technique units and use that control input as the appropriate control input for the BMS.

In a further embodiment of the invention there is provided a controller for optimising energy consumption in a heating system in which the adaptive decider has means to determine the accuracy of each of the proposed BMS control inputs received from the intelligent control technique units and generate an appropriate control input for the BMS based on a weighted average of a plurality of the proposed control inputs of the BMS.

In another embodiment of the invention there is provided a controller for optimising energy consumption in a heating system in which the core processor has a data pre-processing unit to rank each of the intelligent control technique units periodically thereby providing a weighting value to that intelligent control technique unit.

In one embodiment of the invention there is provided a controller for optimising energy consumption in a heating system in which the core processor is provided with a plurality of adaptive deciders arranged in cascading format.

### Detailed Description of the Invention

The invention will be more clearly understood from the following description of some embodiments thereof, given by way of example only, with reference to the accompanying drawings, in which:-
Fig. 1 is a diagrammatic representation of the overall architecture of the controller used to carry out the method according to the invention;
Fig. 2 is a diagrammatic representation of a control panel used with the controller of the present invention;
Fig. 3 is a block diagram of a plurality of adaptive deciders in cascaded format used by the controller;
Fig. 4 is a flow diagram of the energy prediction and optimisation agents;
Fig. 5 is a diagrammatic representation of a predictor/optimiser neural network with genetic algorithms;
Fig. 6 is diagrammatic representation of a predictive recursive optimal control unit for use with the controller of the present invention; and
Fig. 7 is a diagrammatic representation of a zone in a building in which the method and controller according to the present invention operate.

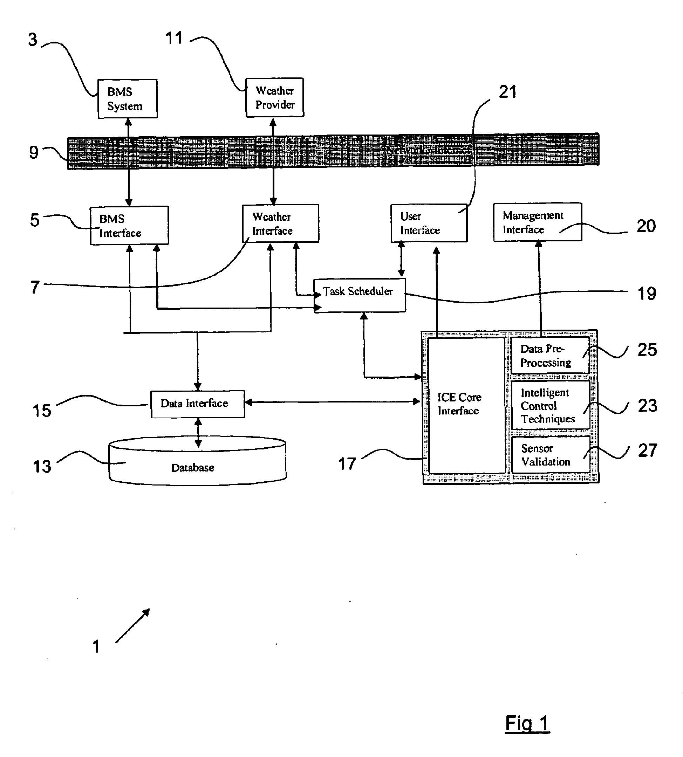

Referring to the drawings and initially to Fig. 1 thereof there is shown a controller for optimising energy consumption, indicated generally by the reference numeral 1. The controller 1 operates in a building (not shown) having a heating system monitored and controlled by a building management system (BMS) 3. The controller 1 comprises a BMS interface 5 and a weather interface 7 for receiving building environmental conditions data and weather data respectively over a network 9, in this case the internet. The weather data is received by the weather interface over the network 9 from a weather provider 11. The controller 1 further comprises a database 13 having a data interface 15, a core processor 17, a supervisor module (not shown), a task scheduler 19, a management interface 20 and a user interface 21. The core processor 17 further comprises a plurality of intelligent control technique units 23 (only one of which is shown), a data preprocessing unit 25 and a sensor validation unit 27.

In use, the controller 1 gathers building environmental conditions data from the BMS system 3 and weather data from the weather provider 11. The building environmental conditions data and weather data are stored in database 13 for subsequent processing by the core processor 17. The building environmental conditions data and the weather data are in turn applied to a plurality of intelligent control technique units 23 which each provide a proposed BMS control input based on the building environmental conditions data and the weather data. The core processor 17 determines the accuracy of the proposed BMS control inputs for each of the intelligent control techniques and thereafter determines an appropriate control input for the BMS. A response is sent from the core processor 17 to the BMS system 3 via the BMS interface 5. The BMS system may thereafter operate using the appropriate control input.

In the embodiment shown either current or predicted weather conditions may be provided from the external source via the internet. Indeed, the BMS system itself may also provide data such as the actual current temperature inside a particular floor of the building or the actual temperature outside a particular building. The inside temperature or any inside variables of the building are not considered "weather data" by the system. However the BMS may have solar index sensors and the like that would be considered to be weather data. The supervisor module (not shown) monitors and controls system processes. The task scheduler 19 schedules tasks in the controller such as getting the weather for the next time period for the core processor so that it may carry out calculations on the building environmental conditions data. The intelligent control techniques comprise neural network techniques, genetic algorithm techniques and fuzzy logic techniques. Each of these techniques may be particularly accurate in certain circumstances in environmental conditions and less accurate in other environmental conditions. Therefore, it is possible to choose the most accurate intelligent control technique for use in that particular environmental condition. This is achieved by using the data preprocessing module 25 which monitors the accuracy of the predictions of each of the intelligent control techniques over time and thereafter may assign a weighting to each intelligent control technique so that a weighted average of each of the intelligent control techniques based on their historical accuracy may be provided.

As an alternative to this it may be preferable to simply provide the most accurate of each of the intelligent control techniques without providing a weighted average. This would depend on the preferences of the user. Certain intelligent control techniques may be used to control different parts of the BMS in preference to other intelligent control techniques. Furthermore, different intelligent control techniques such as those understood in the art of intelligent control techniques may be implemented also in a relatively straightforward manner. Other intelligent control techniques include hill climbing algorithms such as gradient descent and Tabu search. Also, Bayesian Belief Networks used for expert systems and other neural networks such as Self-Organising Maps (SOM) for sensitivity analysis and recurrent neural networks. By storing the values of the environmental conditions, the weather conditions and the resulting values of the building management system, it is possible to determine, over time, those techniques that are more successful than others in achieving the desired goal (of reducing the building energy demand). Furthermore, it is possible to determine which of the techniques is particularly efficient in one weather condition and those which are efficient in other weather conditions. Therefore, the historical analysis is particularly useful in this invention.

The controller 17 may use any intelligent algorithm or combination of algorithms to control any part of the BMS system. For example, there may be a number of states of the system that can be monitored to optimise energy consumption such as optimal start, optimal stop and optimal set-point control. Certain intelligent control algorithms may be more effective than others. Furthermore, the data preprocessing module 25 that determines the most pertinent variables for each of the control modules could itself use any intelligent algorithm such as a genetic algorithm or fuzzy logic controller. In that way, the data pre-processing system is used to find the most dominant control variable in the system under control using either Fuzzy Logic, Neural Networks or ReliefF. ReliefF is a common name for relief algorithms that are general and successful attribute estimators. An adaptive decider (not shown) can also be used to select the optimal algorithm.

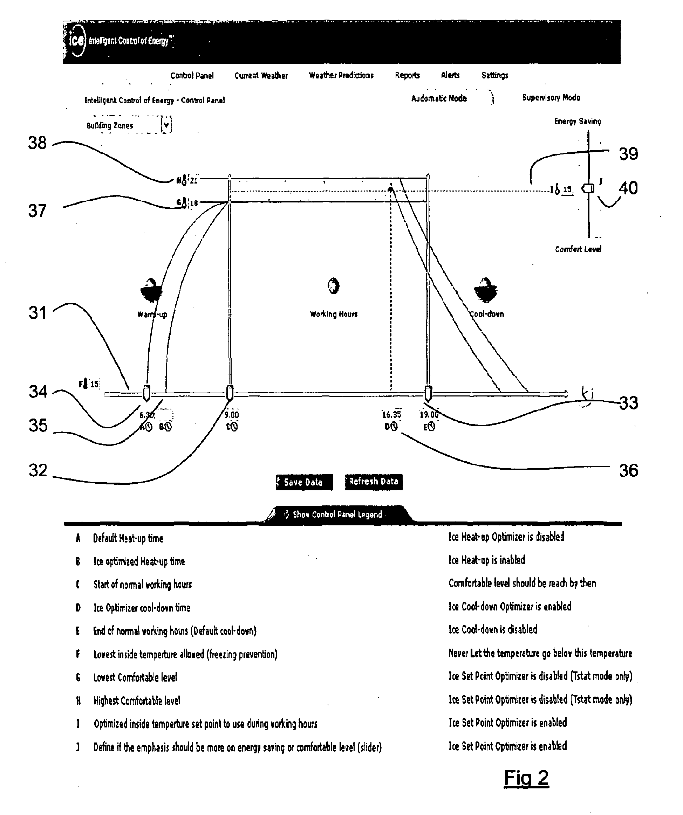

Referring to Fig. 2 of the drawings there is shown a diagrammatic representation of the user interface used in accordance with the present invention. It can be seen from the diagrammatic representation that there is provided a timeline 31 representative of a working day. The start time of the working day 9.00am is shown at numeral 32 and the stop time of the working day is shown at numeral 33. In order to ensure that the temperature in a building is at an acceptable level for the employees as they start their working day, there is provided a default heat uptime 34, in this case 6.30am in the morning. However, if the weather is particularly mild for that time of year then the actual start time necessary to achieve a starting temperature of 18° C at 9.00am is in fact the optimised start time 7.12am, shown by numeral 35. Similarly, it is envisaged that there may be a default cool down time corresponding to the end of the working day, 33, rather than a cool down time depending on the actual external or internal temperature, or an optimised cool down time that takes external and internal temperatures, amongst other things, into account. The optimised cool down time, 16.35pm, is shown as numeral 36 in the drawing. Furthermore, the operator may set the lowest comfortable level, 37, and the highest comfortable level, 38, as well as an optimised inside temperature setpoint to use during working hours, 39, between the highest and lowest levels. It is also possible for the operator to determine the balance between energy savings and comfort level by moving a slider, 40. By moving the slider, 40, the BMS may be caused to operate very strictly to the conditions or may be caused to operate in the most economic way to provide an acceptable level of comfort to the employees.

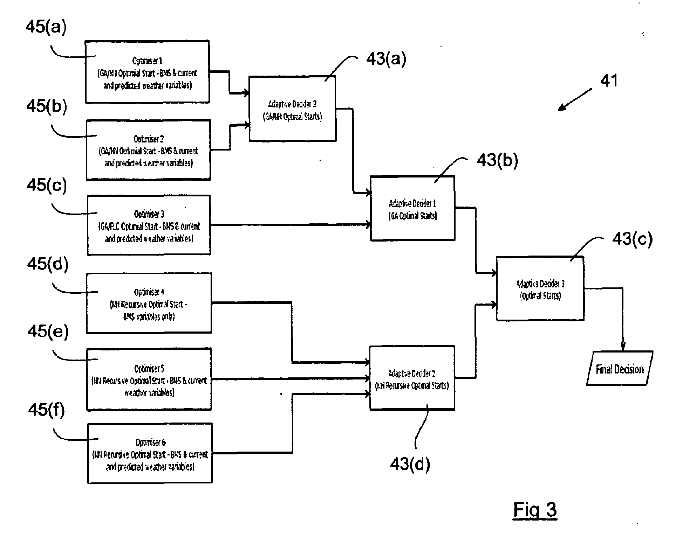

Referring to Fig. 3 of the drawings there is shown a block diagram of a plurality of adaptive deciders in cascaded format used by the controller. Because any control algorithm could be running on the controller, an adaptive decider provides a way of choosing between the algorithms. The adaptive decider, indicated generally by the reference numeral 41 comprises a number of individual adaptive deciders 43(a), 43(b), 43(c) and 43(d). Each adaptive decider 43(a), 43(b) and 43(c) takes a control decision from a number of different optimisers 45(a), 45(b), 45(c), 45(d), 45(e) and 45(f) which are essentially hybrid algorithms, and chooses the best one to use by minimisation of the error. The adaptive decider 41 is the mechanism that determines which of these optimisers 45(a), 45(b), 45(c), 45(d), 45(e) and 45(f) or rules performs the best over time and ranks them continuously based on their estimation accuracy based on historical data. The adaptive decider could then return the result of the best rule or compute a weighted average from the rules. The overall estimation would be an average of all the estimations but the best rule with the highest ranking would have a higher co-efficient in the average. This approach is adaptive, meaning that it is taken into account if a particular rule does not perform well during summer because it uses irrelevant variables which do not make sense in the summer that may perform much better in winter and similarly the best performing rules in summer may not perform so well in winter. This is automatically handled and determined as after each day, the adaptive decider 41 recalculates the ranking of all the rules, balancing them out and therefore always uses the best rule estimates based on how accurate they have been.

The optimisers 45(a), 45(b), 45(c) , 45(d), 45(e) and 45(f) receive inputs from a data mining and selection of variables unit (not shown). The optimisers 45(a) and 45(b) each comprise a hybrid genetic algorithm and neural network for calculating optimal start using BMS, current and predicted weather variables whereas the optimiser 45(c) comprises a fuzzy logic controller combined with a genetic algorithm for calculating optimal start using BMS, current and predicted weather variables. The optimiser 45(d) comprises a neural network designed to calculate recursive optimal start with BMS variables only, the optimiser 45(e) comprises a neural network designed to calculate recursive optimal start using BMS and current weather variables whereas the optimiser 45(f) comprises a neural network designed to calculate recursive optimal start using BMS, current and predicted weather variables. The data mining and selection of variables unit itself comprises a neural network, fuzzy logic controller, genetic algorithm and/or other intelligent control techniques. The adaptive deciders can easily be cascaded to handle a large number of rules. For instance, it is possible to use one adaptive decider 43(a) for the optimal start rule calculated using neural networks and genetic algorithm by optimiser 45(a) and calculated using different neural networks and genetic algorithm by optimiser 45(b) and another adaptive decider 43(b) for the output of the first adaptive decider 43(a) and the output of the optimiser 45(c) that calculates the optimal start using fuzzy logic controller combined with a genetic algorithm rules. The output (decided estimation based on the rule ranking) of the decider 43(b) is the input of a third adaptive decider 43(c) along with the output of another adaptive decider 43(d). The adaptive decider 43(c) ranks the two deciders 43(b) and 43(d), meaning that it ranks the rule types and provides the most accurate estimation.

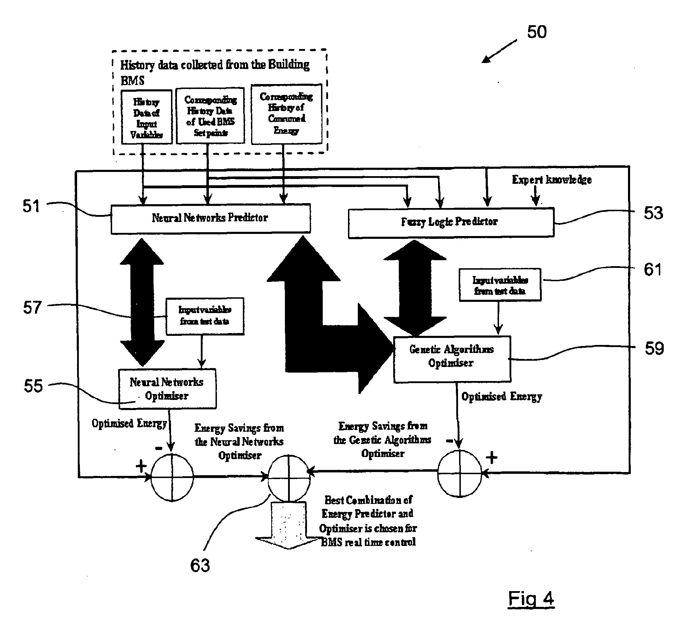

Referring now to Fig. 4 of the drawings, there is shown an energy prediction and optimising agent, indicated generally by the reference numeral 50, the energy prediction and optimising agent 50 comprises a neural network predictor 51, a fuzzy logic predictor 53, a neural network optimiser 55, an input variable from test data unit 57, a genetic algorithms optimiser 59 and an input variable for test data unit 61. The energy prediction and optimisation agent takes inputs which are historical data collected from the building BMS including historical data of input variables, corresponding historical data of used BMS setpoints and corresponding historical data of consumed energy. This information is fed to the neural network predictor 51 and in turn to the neural network optimiser 55 along with input variables from test data so that optimised energy result from the neural networks may be provided. Similarly, the same inputs are fed to the fuzzy logic predictor 53 and then in turn to the genetic algorithms optimiser 59 so that an optimised energy result from the fuzzy logic and genetic algorithm may be achieved. The energy savings from the neural network optimiser and the energy savings from the genetic algorithm optimiser are each fed to a summation device where the result is compared with a corresponding historical value of consumed energy and then to a comparator device 63 and the best combination of energy predictor and optimiser is chosen for the BMS realtime control.

Essentially, therefore, there is shown an architecture of hybrid optimiser that uses neural networks, genetic algorithms and fuzzy logic to optimise energy usage while predicting future start times or setpoints. The architecture may be used for setpoint control and optimal start algorithms (without the fuzzy logic module).

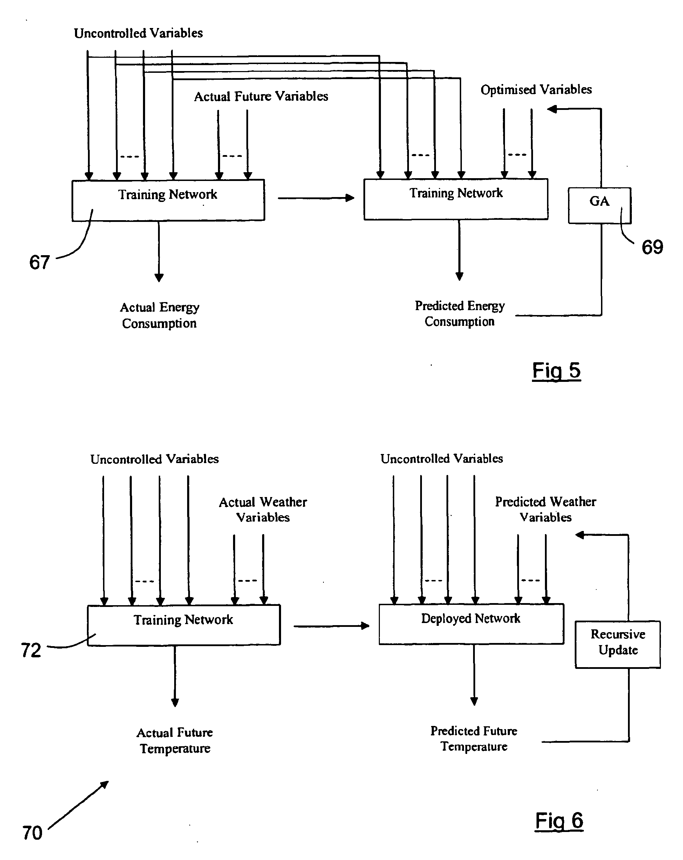

One such architecture used for optimal start algorithms as shown in Fig. 5 in which inputs to the training neural network 67 are the controlled parameters such as inside temperature, outside temperature and other weather variables. The other variables are future values such as inside temperature in the next hour that are known from historical data. The output 69 is energy consumption or amount of heat used in a certain time. After training in neural network with these inputs, the predictor network uses the same weights from the training network. The un-controlled inputs are the same, however, the optimised variables now become the setpoint to reach at a certain time. The optimised variables are varied and different values are tried through the optimisation algorithm, in this case, a genetic algorithm 69. This is carried out until values that return minimum energy consumption are found. There are often constraints on the optimised values such as the setpoint should be between 20° C and 22° C or what is the minimum energy consumption to reach 23° C from 17° C, that can be incorporated into the genetic algorithm. As well as minimising energy consumption, an additional objective can be used for setpoint control, namely comfort level. An increase in comfort level may decrease energy consumption, so these objectives are in conflict. The genetic algorithm is a good way of resolving conflicts. It is important to note that the objective of comfort level is added to the objective of energy savings in the controller, the slider bar used in the ICE Cube Graphical User Interface (GUI) allows the user to set these two objectives (e.g. For a Hospital: Energy Savings*0.1 + Comfort Level*0.9, Office Building: Energy Savings*0.7 + Comfort Level*0.3). If it is too hot then it is possible that by lowering the temperature (and thereby using less energy) you can increase the comfort level.

Referring now to Fig. 6 of the drawings there is shown a predictive recursive optimum control algorithm using a neural network indicated generally by the reference numeral 70. The training network 72 takes input variables at certain time slots and the output is a control temperature at a short time interval in the future. Once trained, the weights of the neural network are called recursive within input (recursively by input) parameters, using predicted values from the weather forecast and the like. The new inside temperature will be returned at each time step and this is then fed into the next time step so that the temperature some time into the future can be predicted. In this way, optimal start times and stop times can be estimated from current conditions, BMS state and predicted weather variables.

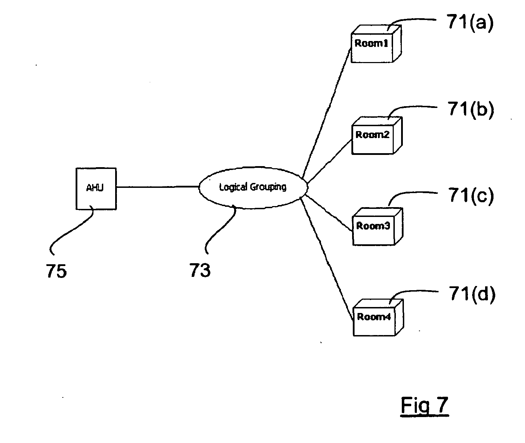

Referring to Figure 7, there is shown a zone in a building that may be controlled by the method and apparatus according to the present invention. The zone comprises a plurality of rooms, 71(a), 71(b), 71(c) and 71(d) that are grouped together in a logical grouping 73. The rooms 71(a) - 71(d) are serviced by an air handling unit (AHU) 75. A flexible zone map (not shown) for the building may be provided. The flexible zone map for the buildings allows the present invention to map the building plant using various zones in the building. This flexible zone map will preferably be visible from the user interface and will show the logical proximity of the building plan controlling the specific zone.

There are numerous advantages to the adaptive decider in particular that enhance the present invention. More specifically, the adaptive decider provides much more than just the selection of the best fitting algorithm for a specific situation. The adaptive decider completes this function in real time based on the most up to date data readings and thus improves the performance of the overall system by saving more energy. Each time a new set of predictions is computed by various algorithms (optimisers) for a given optimised control value, the adaptive decider computes a single prediction out of them. This final prediction can be based on top best average, weighted average, simply the single best value or any other techniques/heuristics that may be required and relevant. The adaptive decider's accuracy evaluator task checks the over time accuracy of each algorithm once the real world value is known so that their predictions can be verified. This allows the invention to always use the most optimised and accurate value for the given conditions and to constantly update and compute the algorithms accuracies to adapt quickly and efficiently.

A further consideration of the present invention and the adaptive decider in particular is that there is a significant need for scalability in the present invention as more algorithms are introduced and also how the algorithms are arranged and selected. It has been found that an effective way to achieve efficient selection of an algorithm is to use a method of grouping and arranging such as that described that will allow for a cascaded structure for efficient scaling. The adaptive decider according to the present invention is also flexible in that it can average the top best performing algorithms providing a more optimal solution for the best performing algorithms. The cascading concept also allows the grouping of similar algorithms by 'family' thereby providing the flexibility to decide quickly the use of the most efficient algorithm for a particular case. The grouping of the optimisers by type is shown in Figure 3. The adaptive decider essentially comprises a plurality of sub adaptive deciders that can easily be cascaded to handle a large number of rules. For example, we may use one adaptive decider for the optimal recursive rules and another one for the genetic algorithm optimal start rules, the output (decided estimation based on the rule rankings) of these two sub adaptive deciders would be the input of a third adaptive decider which would also be used in the ranking of the first two adaptive deciders, thereby ranking the rule types and providing the most accurate estimation. This is possible as both optimisers and adaptive decider share the same application programming interface (API).

The Adaptive Decider can also be used as an adaptive group decider. To know when to start a piece of BMS equipment such as Air Handling Unit which supplies various zones, the present invention computes the heating/cooling demand for each of these zones, when there is a demand, the piece of equipment is started. The Adaptive Decider can be used to group these zones, for the start optimiser in this example, to determine the demand time prediction. By doing this, if a zone does not return an accurate prediction because it has been altered or a window is broken, left open or because of a faulty sensor, the adaptive decider will automatically ignore this zone in the prediction. When the adaptive group decider detects such problem an alert could also be sent to the relevant personnel automatically to warn them.

Another advantage of the adaptive decider used in accordance with the present invention is that if an algorithm typically has a very low output accuracy (based on a specific predetermined threshold), the algorithm could be identified and disabled to save on processing cycles. Based on that scenario, some optimisers may only be disabled for a given time period, after which the optimiser would be re-enabled, its accuracy computed and if it is back to a more acceptable accuracy level, it would remain enabled until its performance degrades again. It is important to note that by using a low performance threshold, the adaptive decider is also a suitable indicator to trigger re-training of some the algorithms when their performances go below a given threshold. If a rule is disabled from the user, the adaptive decider will detect that one of its input handle does not point anywhere and will automatically ignore this input. If using a zone map, the adaptive decider will need to have all of it's inputs connected to a rule. In order to facilitate this, a dummy rule which will return a 'null' value will be used to tell the adaptive decider that this is a dummy rule and should therefore be ignored. Alternatively the adaptive decider could support a variable number of parameters (via relationship/look-up) for some object type such as another adaptive decider or optimiser. This means that a single adaptive decider could in theory handle any number of algorithms. Having said this, it is strongly recommended to use cascaded adaptive deciders as outlined in this specification to better group algorithms and achieve better performance results.

One additional aspect that should be taken into consideration is persistency. The rule ranking of the adaptive decider, computed by the accuracy evaluator task, should be saved either to a file or in the database. It is recommended to use the database to store the algorithm accuracy over time as this will facilitate reporting capabilities of each algorithm if necessary at a later stage.

It can be seen that the present invention could be adapted to incorporate other intelligent control techniques other than those already mentioned as would be understood by the person skilled in the art. By having such a system, it is possible to establish the most energy efficient ways to heat buildings whilst at the same time providing a suitable level of comfort to the occupants. The invention could be used in large skyscrapers or indeed could be used in homes and the like in order to provide a tighter control of the heating costs in the building.

It will be understood that various parts of the present invention and in particular the method steps may be implemented as a computer program running on a suitable computer or processor. The present invention is therefore intended to extend to a computer program for implementing the invention. The computer program may be embodied as code such as source code, object code or a format of code intermediate source code and object code. The code may be stored on or in a carrier. The carrier may be any suitable carrier for storing a computer program including but not limited to a RAM, ROM, CDROM, DVD, CD, floppy disc, zip drive, tape drive, or any other memory storage device. Similarly, the program may be in a form transmissible over a communication network in which case the communication network itself including the cabling, servers and other equipment of the communications network in which the computer program is stored or resides in or on, en route to its destination, may be considered to be a carrier.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail with the scope of the claims.

## Claims

1. A method of optimising energy consumption in a building having a building management system (BMS) (3), the BMS (3) being used to monitor the environmental conditions of the building and control the heating system of the building, the method comprising the steps of:
gathering the building environmental conditions data;
gathering weather data relevant to the building;
applying a plurality of intelligent control techniques to the building environmental conditions data and the weather data to provide an appropriate control input for the BMS; and
providing the appropriate control input to the BMS (3) for subsequent implementation by the BMS
**characterised in that** the method comprises the intermediate steps of:
calculating a proposed BMS control input using each intelligent control technique;
determining the accuracy of the proposed BMS control input for each of the intelligent control techniques and thereafter determining an appropriate control input for the BMS.

2. A method as claimed in claim 1 in which the step of applying the plurality of intelligent control techniques to the building environmental conditions data and the weather data comprises applying two or more of neural network techniques, genetic algorithm techniques and fuzzy logic techniques.

3. A method as claimed in claim 1 or 2 in which the step of determining the efficiency of the intelligent control techniques further comprises the steps of:
comparing the building environmental conditions data and weather data with historical data stored in a database (13);
determining the set of historical data that most closely matches the building environmental conditions data and weather data; and
thereafter determining the accuracy of the intelligent control techniques based on the accuracy of the intelligent control techniques historically.

4. A method as claimed in any preceding claim in which the step of determining the appropriate control input for the BMS (3) comprises using the intelligent control technique that is determined to be the most accurate for those conditions.

5. A method as claimed in any of claims 1 to 3 in which the step of determining the appropriate control input for the BMS (3) comprises generating a control input from a weighted average of a plurality of the intelligent control techniques with the weighting based on their historical accuracy.

6. A method as claimed in any preceding claim in which the step of determining the accuracy of the intelligent control techniques further comprises minimisation of the error of each of the intelligent control techniques.

7. A method as claimed in any preceding claim in which the step of providing the appropriate control input to the BMS (3) further comprises providing one or more of an optimal start time, an optimal stop time and a setpoint control.

8. A method as claimed in any preceding claim in which the BMS data and weather data are received over a network interface.

9. A method as claimed in any preceding claim in which the intelligent control techniques are arranged in a cascaded manner.

10. A method as claimed in any preceding claim in which the weather data comprises predicted weather data.

11. A method as claimed in any preceding claim in which the weather data comprises current weather data.

12. A method as claimed in any preceding claim in which the intelligent control techniques use recursive processing to determine control inputs to the BMS.

13. A method as claimed in any preceding claim in which the step of determining an appropriate control input for the BMS from the intelligent control techniques further comprises using an adaptive decider.

14. A method as claimed in claim 13 in which the adaptive decider ranks each of the intelligent control techniques periodically and takes the highest ranked intelligent control technique.

15. A method as claimed in claim 13 in which the adaptive decider ranks each of the intelligent control techniques periodically and provides a weighted average of a plurality of the intelligent control techniques.

16. A method as claimed in claim 14 or 15 in which the adaptive decider ranks the intelligent control techniques based on historical accuracy data.

17. A method as claimed in any of claims 13 to 16 in which the adaptive decider uses one or more variables including external weather conditions, heating and cooling requirements of the building, and optimal selection of the most appropriate algorithms for these variables.

18. A method as claimed in any of claims 13 to 17 in which the intelligent control techniques are grouped together by type.

19. A method as claimed in any preceding claim in which an intelligent control technique algorithm that is deemed to have low output accuracy is disabled.

20. A method as claimed in any of claims 1 to 18 in which an intelligent control technique algorithm that is deemed to have low output accuracy is retrained.

21. A method as claimed in any preceding claim in which the method comprises the step of using a hybrid genetic algorithm and neural network approach to predict one of the optimal start time, the optimal stop time and the setpoint temperature.

22. A method as claimed in any preceding claim in which the method comprises the step of using a hybrid fuzzy logic controller and neural network approach to predict one of the optimal start time, the optimal stop time and the setpoint temperature.

23. A method as claimed in any preceding claim in which the method comprises the step of implementing data-mining techniques using a hybrid fuzzy logic and genetic algorithm approach to determine the variables for the optimisers (43(a), 43(b), 43(c), 43(d), 43(e), 43(f)).

24. A method as claimed in any preceding claim in which the method comprises the step of using a neural network approach implementing predictive recursive techniques to determine one of the optimal start time and the optimal stop time.

25. A method as claimed in claim 24 in which the neural network approach implementing predictive recursive techniques are carried out repeatedly with the desired output a time interval less than 30 minutes in the future each time the technique is carried out.

26. A controller (1) for optimising energy consumption in a building having a heating system monitored and controlled by a building management system (BMS) (3), the controller comprising:
means (5, 7) for receiving building environmental conditions data and weather data relating to the building in which the controlled heating system operates;
a database (13) for storing the building environmental conditions data and weather data therein;
a core processor (17) having a plurality of intelligent control technique units (23), each of the intelligent control techniques units having means to receive building environmental conditions data and weather data and calculate a proposed BMS control input;
**characterised in that**
the core processor (17) further comprises means to determine the accuracy of each of the intelligent control technique units and means to determine an appropriate control input for the BMS; and
the controller (1) having means to transmit the appropriate control input to the BMS (3).

27. A controller (1) as claimed in claim 26 in which the plurality of intelligent control technique units (23) comprise two or more of a fuzzy logic unit, a genetic algorithm unit and a neural network unit.

28. A controller (1) as claimed in claim 26 or 27 in which the means to determine the accuracy of each of the intelligent control techniques units (23) comprises means to compare the current set of inputs with historical inputs stored in the database (13) and determine which of the intelligent control technique units was most accurate historically.

29. A controller (1) as claimed in any of claims 26 to 28 in which the core processors (17) means to determine an appropriate control input for the BMS further comprises an adaptive decider (41).

30. A controller (1) as claimed in claim 29 in which the adaptive decider (41) has means to determine the most accurate proposed BMS control input received from the intelligent control technique units (23) and use that control input as the appropriate control input for the BMS (3).

31. A controller (1) as claimed in claim 29 in which the adaptive decider (41) has means to determine the accuracy of each of the proposed BMS control inputs received from the intelligent control technique units (23) and generate an appropriate control input for the BMS (3) based on a weighted average of the proposed control inputs of the BMS.

32. A controller (1) as claimed in claim 31 in which the core processor (17) has a data pre-processing unit (25) to rank each of the intelligent control technique units (23) periodically thereby providing a weighting value to that intelligent control technique unit.

33. A controller (1) as claimed in any of claims 29 to 32 in which the core processor (17) is provided with a plurality of adaptive deciders (43(a), 43(b), 43(c), 43(d)) arranged in cascading format.

34. A controller (1) as claimed in claim 33 in which the output of one of the adaptive deciders (43(a), 43(b), 43(c), 43(d)) is fed as an input to another of the adaptive deciders (43(a), 43(b), 43(c), 43(d)).

35. A computer program comprising program instructions for causing a computer to carry out the method of any of claims 1 to 25.

## Patentansprüche

1. Verfahren zum Optimieren des Energieverbrauchs in einem Gebäude mit einem Gebäudemanagementsystem (BMS) (3), wobei das BMS (3) zum Überwachen der Umgebungsbedingungen des Gebäudes und zum Steuern des Heizsystems des Gebäudes verwendet wird, wobei das Verfahren die folgenden Schritte beinhaltet:
Erfassen der Gebäudeumgebungsbedingungsdaten;
Erfassen von für das Gebäude relevanten Wetterdaten;
Anwenden mehrerer intelligenter Steuertechniken auf die Gebäudeumgebungsbedingungsdaten und die Wetterdaten, um einen geeigneten Steuereingang für das BMS zu erzeugen; und
Anlegen des geeigneten Steuereingangs an das BMS (3) für die nachfolgende Implementation durch das BMS;
**dadurch gekennzeichnet, dass** das Verfahren die folgenden Zwischenschritte beinhaltet:
Berechnen eines vorgeschlagenen BMS-Steuereingangs mittels jeder intelligenten Steuertechnik;
Ermitteln der Genauigkeit des vorgeschlagenen BMS-Steuereingangs für jede der intelligenten Steuertechniken und danach Ermitteln eines geeigneten Steuereingangs für das BMS.

2. Verfahren nach Anspruch 1, wobei der Schritt des Anwendens der mehreren intelligenten Steuertechniken auf die Gebäudeumgebungsbedingungsdaten und die Wetterdaten das Anwenden von zwei oder mehr aus Neuronalnetztechniken, genetischen Algorithmustechniken und Fuzzy-Logik-Techniken beinhaltet.

3. Verfahren nach Anspruch 1 oder 2, wobei der Schritt des Ermittelns der Effizienz der intelligenten Steuertechniken ferner die folgenden Schritte beinhaltet:
Vergleichen der Gebäudeumgebungsbedingungsdaten und Wetterdaten mit in einer Datenbank (13) gespeicherten historischen Daten;
Ermitteln des Satzes von historischen Daten, die am besten mit den Gebäudeumgebungsbedingungsdaten und Wetterdaten übereinstimmen; und
danach Ermitteln der Genauigkeit der intelligenten Steuertechniken auf der Basis der historischen Genauigkeit der intelligenten Steuertechniken.

4. Verfahren nach einem der vorherigen Ansprüche, wobei der Schritt des Ermittelns des geeigneten Steuereingangs für das BMS (3) die Anwendung der intelligenten Steuertechnik beinhaltet, die als die genaueste für diese Bedingungen ermittelt wird.

5. Verfahren nach einem der Ansprüche 1 bis 3, wobei der Schritt des Ermittelns des geeigneten Steuereingangs für das BMS (3) das Erzeugen eines Steuereingangs von einem gewichteten Durchschnitt mehrerer der intelligenten Steuertechniken mit der Gewichtung auf der Basis ihrer historischen Genauigkeit beinhaltet.

6. Verfahren nach einem der vorherigen Ansprüche, wobei der Schritt des Ermittelns der Genauigkeit der intelligenten Steuertechniken ferner das Minimieren des Fehlers jeder der intelligenten Steuertechniken beinhaltet.

7. Verfahren nach einem der vorherigen Ansprüche, wobei der Schritt des Erzeugens des geeigneten Steuereingangs für das BMS (3) ferner das Geben einer optimalen Startzeit, einer optimalen Stoppzeit und/oder einer Sollwertregelung beinhaltet.

8. Verfahren nach einem der vorherigen Ansprüche, wobei die BMS-Daten und die Wetterdaten über eine Netzwerkschnittstelle empfangen werden.

9. Verfahren nach einem der vorherigen Ansprüche, wobei die intelligenten Steuertechniken auf eine kaskadierte Weise angeordnet sind.

10. Verfahren nach einem der vorherigen Ansprüche, wobei die Wetterdaten Vorhersagewetterdaten beinhalten.

11. Verfahren nach einem der vorherigen Ansprüche, wobei die Wetterdaten aktuelle Wetterdaten umfassen.

12. Verfahren nach einem der vorherigen Ansprüche, wobei die intelligenten Steuertechniken Steuereingänge in das BMS anhand von rekursiver Verarbeitung ermitteln.

13. Verfahren nach einem der vorherigen Ansprüche, wobei der Schritt des Ermittelns eines geeigneten Steuereingangs für das BMS von den intelligenten Steuertechniken ferner die Anwendung eines adaptiven Entscheidungsglieds beinhaltet.

14. Verfahren nach Anspruch 13, wobei das adaptive Entscheidungsglied jede der intelligenten Steuertechniken periodisch in eine Rangfolge einordnet und die intelligente Steuertechnik mit dem höchsten Rang nimmt.

15. Verfahren nach Anspruch 13, wobei das adaptive Entscheidungsglied jede der intelligenten Steuertechniken periodisch in eine Rangfolge einordnet und einen gewichteten Durchschnitt von mehreren der intelligenten Steuertechniken bereitstellt.

16. Verfahren nach Anspruch 14 oder 15, wobei das adaptive Entscheidungsglied die intelligenten Steuertechniken auf der Basis von historischen Genauigkeitsdaten in eine Rangfolge einordnet.

17. Verfahren nach einem der Ansprüche 13 bis 16, wobei das adaptive Entscheidungsglied eine oder mehrere Variablen einschließlich externer Wetterbedingungen, Heiz- und Kühlerfordernisse des Gebäudes und einer optimalen Wahl der geeignetsten Algorithmen für diese Variablen benutzt.

18. Verfahren nach einem der Ansprüche 13 bis 17, wobei die intelligenten Steuertechniken nach Typ zusammengefasst werden.

19. Verfahren nach einem der vorherigen Ansprüche, wobei ein intelligenter Steuertechnikalgorithmus, der als ein Algorithmus mit einer niedrigen Ausgangsgenauigkeit angesehen wird, gesperrt wird.

20. Verfahren nach einem der Ansprüche 1 bis 18, wobei ein intelligenter Steuertechnikalgorithmus, der als ein Algorithmus mit einer niedrigen Ausgangsgenauigkeit angesehen wird, neu trainiert wird.

21. Verfahren nach einem der vorherigen Ansprüche, wobei das Verfahren den Schritt des Anwendens eines Hybrid-Genetikalgorithmus- und Neuronalnetz-Ansatzes zum Vorhersagen der optimalen Startzeit, der optimalen Stoppzeit oder der Solltemperatur beinhaltet.

22. Verfahren nach einem der vorherigen Ansprüche, wobei das Verfahren den Schritt des Anwendens eines Hybrid-Fuzzy-Logik-Steuerung- und Neuronalnetz-Ansatzes zum Vorhersagen der optimalen Startzeit, der optimalen Stoppzeit oder der Solltemperatur beinhaltet.

23. Verfahren nach einem der vorherigen Ansprüche, wobei das Verfahren den Schritt des Implementierens von Data-Mining-Techniken unter Anwendung eines Hybrid-Fuzzy-Logik- und Genetikalgorithmus-Ansatzes zum Ermitteln der Variablen für die Optimierer (43 (a), 43 (b), 43 (c), 43 (d), 43 (e), 43 (f)) beinhaltet.

24. Verfahren nach einem der vorherigen Ansprüche, wobei das Verfahren den Schritt des Anwendens eines Neuronalnetzansatzes beinhaltet, der prädiktive rekursive Techniken zum Ermitteln der optimalen Startzeit oder der optimalen Stoppzeit implementiert.

25. Verfahren nach Anspruch 24, wobei der prädiktive rekursive Techniken implementierende Neuronalnetzansatz wiederholt mit der gewünschten Ausgabe in einem Zeitintervall von weniger als 30 Minuten in der Zukunft bei jeder Durchführung der Technik durchgeführt werden *[sic].*

26. Steuerung (1) zum Optimieren des Energieverbrauchs in einem Gebäude mit einem Heizsystem, das von einem Gebäudemanagementsystem (BMS) (3) überwacht und gesteuert wird, wobei die Steuerung Folgendes umfasst:
Mittel (5, 7) zum Empfangen von Gebäudeumgebungsbedingungsdaten und Wetterdaten mit Bezug auf das Gebäude, in dem das gesteuerte Heizsystem arbeitet;
eine Datenbank (13) zum Speichern der Gebäudeumgebungsbedingungsdaten und der Wetterdaten darin;
einen Core-Prozessor (17) mit mehreren intelligenten Steuertechnikeinheiten (23), wobei jede der intelligenten Steuertechnikeinheiten Mittel zum Empfangen von Gebäudeumgebungsbedingungsdaten und Wetterdaten und zum Berechnen eines vorgeschlagenen BMS-Steuereingangs umfasst;
**dadurch gekennzeichnet, dass**
der Core-Prozessor (17) ferner Mittel zum Ermitteln der Genauigkeit jeder der intelligenten Steuertechnikeinheiten und Mittel zum Ermitteln eines geeigneten Steuereingangs für das BMS umfasst; und
die Steuerung (1) Mittel zum Übertragen des geeigneten Steuereingangs zum BMS (3) umfasst.

27. Steuerung (1) nach Anspruch 26, wobei die mehreren intelligenten Steuertechnikeinheiten (23) zwei oder mehr aus einer Fuzzy-Logik-Einheit, einer genetischen Algorithmuseinheit und einer Neuronalnetzeinheit umfassen.

28. Steuerung (1) nach Anspruch 26 oder 27, wobei das Mittel zum Ermitteln der Genauigkeit jeder der intelligenten Steuertechnikeinheiten (23) Mittel zum Vergleichen des aktuellen Satzes von Eingängen mit in der Datenbank (13) gespeicherten historischen Eingängen und zum Ermitteln umfasst, welche der intelligenten Steuertechnikeinheiten historisch am genauesten war.

29. Steuerung (1) nach einem der Ansprüche 26 bis 28, wobei das Mittel des Core-Prozessors (17) zum Ermitteln eines geeigneten Steuereingangs für das BMS ferner ein adaptives Entscheidungsglied (41) umfasst.

30. Steuerung (1) nach Anspruch 29, wobei das adaptive Entscheidungsglied (41) Mittel zum Ermitteln des genauesten vorgeschlagenen BMS-Steuereingangs, der von den intelligenten Steuertechnikeinheiten (23) empfangen wurde, und zum Verwenden dieses Steuereingangs als den geeigneten Steuereingang für das BMS (3) umfasst.

31. Steuerung (1) nach Anspruch 29, wobei das adaptive Entscheidungsglied (41) Mittel zum Ermitteln der Genauigkeit jedes der vorgeschlagenen BMS-Steuereingänge, die von den intelligenten Steuertechnikeinheiten (23) empfangen wurden, und zum Erzeugen eines geeigneten Steuereingangs für das BMS (3) auf der Basis eines gewichteten Durchschnitts der vorgeschlagenen Steuereingänge des BMS umfasst.

32. Steuerung (1) nach Anspruch 31, wobei der Core-Prozessor (17) eine Datenvorverarbeitungseinheit (25) umfasst, um jede der intelligenten Steuertechnikeinheiten (23) periodisch in eine Rangfolge einzuordnen, um diesem intelligenten Steuertechnikeinheit dadurch einen Gewichtungswert bereitzustellen.

33. Steuerung (1) nach einem der Ansprüche 29 bis 32, wobei der Core-Prozessor (17) mit mehreren adaptiven Entscheidungsgliedern (43(a), 43(b), 43(c), 43 (d)) versehen ist, die in einem kaskadierenden Format angeordnet sind.

34. Steuerung (1) nach Anspruch 33, wobei der Ausgang von einem der adaptiven Entscheidungsglieder (43(a), 43(b), 43(c), 43(d)) als Eingang in ein anderes der adaptiven Entscheidungsglieder (43(a), 43(b), 43(c), 43(d)) gespeist wird.

35. Computerprogramm, das Programmbefehle beinhaltet, um einen Computer zu veranlassen, das Verfahren nach einem der Ansprüche 1 bis 25 auszuführen.

## Revendications

1. Un procédé d'optimisation de la consommation d'énergie dans un bâtiment possédant un système de gestion de bâtiment (BMS) (3), le BMS (3) étant utilisé pour surveiller les conditions environnementales du bâtiment et commander le système de chauffage du bâtiment, le procédé comprenant les opérations suivantes :
le recueil des données de conditions environnementales du bâtiment,
le recueil de données météorologiques pertinentes pour le bâtiment,
l'application d'une pluralité de techniques de commande intelligentes aux données de conditions environnementales du bâtiment et aux données météorologiques de façon à fournir une entrée de commande appropriée au BMS, et
la fourniture de l'entrée de commande appropriée au BMS (3) pour une mise en oeuvre subséquente par le BMS
**caractérisé en ce que** le procédé comprend les opérations intermédiaires suivantes :
le calcul d'une entrée de commande BMS proposée au moyen de chaque technique de commande intelligente,
la détermination de la précision de l'entrée de commande BMS proposée pour chacune des techniques de commande intelligentes et ensuite la détermination d'une entrée de commande appropriée pour le BMS.

2. Un procédé selon la Revendication 1 dans lequel l'opération d'application de la pluralité de techniques de commande intelligentes aux données de conditions environnementales du bâtiment et aux données météorologiques comprend l'application de deux techniques ou plus parmi des techniques de réseau neuronal, des techniques d'algorithme génétique et des techniques de logique floue.

3. Un procédé selon la Revendication 1 ou 2 dans lequel l'opération de détermination de l'efficacité des techniques de commande intelligentes comprend en outre les opérations suivantes :
la comparaison des données de conditions environnementales du bâtiment et de données météorologiques à des données d'historique conservées en mémoire dans une base de données (13),
la détermination de l'ensemble de données d'historique qui correspond le plus étroitement aux données de conditions environnementales du bâtiment et aux données météorologiques, et
ensuite la détermination de la précision des techniques de commande intelligentes en fonction de la précision des techniques de commande intelligentes sur le plan de l'historique.

4. Un procédé selon l'une quelconque des Revendications précédentes dans lequel l'opération de détermination de l'entrée de commande appropriée pour le BMS (3) comprend l'utilisation de la technique de commande intelligente qui a été déterminée comme étant la plus précise pour ces conditions.

5. Un procédé selon l'une quelconque des Revendications 1 à 3 dans lequel l'opération de détermination de l'entrée de commande appropriée pour le BMS (3) comprend la génération d'une entrée de commande à partir d'une moyenne pondérée d'une pluralité des techniques de commande intelligentes avec la pondération basée sur leur précision d'historique.

6. Un procédé selon l'une quelconque des Revendications précédentes dans lequel l'opération de détermination de la précision des techniques de commande intelligentes comprend en outre une minimisation de l'erreur de chacune des techniques de commande intelligentes.

7. Un procédé selon l'une quelconque des Revendications précédentes dans lequel l'opération de fourniture de l'entrée de commande appropriée au BMS (3) comprend en outre la fourniture d'un ou plusieurs éléments parmi une heure de démarrage optimale, une heure d'arrêt optimale et une commande point de consigne.

8. Un procédé selon l'une quelconque des Revendications précédentes dans lequel les données BMS et les données météorologiques sont reçues par l'intermédiaire d'une interface de réseau.

9. Un procédé selon l'une quelconque des Revendications précédentes dans lequel les techniques de commande intelligentes sont agencées en cascade.

10. Un procédé selon l'une quelconque des Revendications précédentes dans lequel les données météorologiques comprennent des données météorologiques prévues.

11. Un procédé selon l'une quelconque des Revendications précédentes dans lequel les données météorologiques comprennent des données météorologiques actuelles.

12. Un procédé selon l'une quelconque des Revendications précédentes dans lequel les techniques de commande intelligentes utilisent un traitement récursif de façon à déterminer des entrées de commande pour le BMS.

13. Un procédé selon l'une quelconque des Revendications précédentes dans lequel l'opération de détermination d'une entrée de commande appropriée pour le BMS à partir des techniques de commande intelligentes comprend en outre l'utilisation d'un décideur adaptatif.

14. Un procédé selon la Revendication 13 dans lequel le décideur adaptatif classe chacune des techniques de commande intelligentes périodiquement et prend la technique de commande intelligente la mieux classée.

15. Un procédé selon la Revendication 13 dans lequel le décideur adaptatif classe chacune des techniques de commande intelligentes périodiquement et fournit une moyenne pondérée d'une pluralité des techniques de commande intelligentes.

16. Un procédé selon la Revendication 14 ou 15 dans lequel le décideur adaptatif classe les techniques de commande intelligentes en fonction de données de précision d'historique.

17. Un procédé selon l'une quelconque des Revendications 13 à 16 dans lequel le décideur adaptatif utilise une ou plusieurs variables comprenant des conditions météorologiques externes, des exigences de chauffage et de rafraîchissement du bâtiment et une sélection optimale des algorithmes les plus appropriés pour ces variables.

18. Un procédé selon l'une quelconque des Revendications 13 à 17 dans lequel les techniques de commande intelligentes sont regroupées par type.

19. Un procédé selon l'une quelconque des Revendications précédentes dans lequel un algorithme de technique de commande intelligente qui est considéré avoir une précision de sortie faible est désactivé.

20. Un procédé selon l'une quelconque des Revendications 1 à 18 dans lequel un algorithme de technique de commande intelligente qui est considéré avoir une précision de sortie faible fait l'objet d'un nouvel apprentissage.

21. Un procédé selon l'une quelconque des Revendications précédentes dans lequel le procédé comprend l'opération d'utilisation d'un algorithme génétique hybride et d'une approche par réseau neuronal de façon à prévoir un élément parmi l'heure de démarrage optimale, l'heure d'arrêt optimale et la température de point de consigne.

22. Un procédé selon l'une quelconque des Revendications précédentes dans lequel le procédé comprend l'opération d'utilisation d'un système de commande à logique floue hybride et d'une approche par réseau neuronal de façon à prévoir un élément parmi l'heure de démarrage optimale, l'heure d'arrêt optimale et la température de point de consigne.

23. Un procédé selon l'une quelconque des Revendications précédentes dans lequel le procédé comprend l'opération de mise en oeuvre de techniques d'exploration de données au moyen d'une approche par algorithme génétique et logique floue hybride de façon à déterminer les variables pour les optimisateurs (43 (a), 43 (b), 43 (c), 43 (d), 43 (e), 43 (f)).

24. Un procédé selon l'une quelconque des Revendications précédentes dans lequel le procédé comprend l'opération d'utilisation d'une approche par réseau neuronal mettant en oeuvre des techniques récursives prédictives de façon à déterminer un élément parmi l'heure de démarrage optimale et l'heure d'arrêt optimale.

25. Un procédé selon la Revendication 24 dans lequel l'approche par réseau neuronal mettant en oeuvre des techniques récursives prédictives sont exécutées *[sic]* de manière répétée avec la sortie souhaitée à des intervalles temporels de moins de 30 minutes dans le futur chaque fois que la technique est exécutée.

26. Un système de commande (1) destiné à optimiser la consommation d'énergie dans un bâtiment possédant un système de chauffage surveillé et commandé par un système de gestion de bâtiment (BMS) (3), le système de commande comprenant :
un moyen (5, 7) de réception de données de conditions environnementales de bâtiment et de données météorologiques relatives au bâtiment dans lequel le système de chauffage commandé fonctionne,
une base de données (13) destinée à conserver en mémoire les données de conditions environnementales du bâtiment et des données météorologiques,
un processeur noyau (17) possédant une pluralité d'unités de technique de commande intelligente (23), chacune des unités de technique de commande intelligente possédant un moyen de réception de données de conditions environnementales de bâtiment et de données météorologiques et de calcul d'une entrée de commande BMS proposée,
**caractérisé en ce que**
le processeur noyau (17) comprend en outre un moyen de détermination de la précision de chacune des unités de technique de commande intelligente et un moyen de détermination d'une entrée de commande appropriée pour le BMS, et
le système de commande (1) possédant un moyen de transmission de l'entrée de commande appropriée au BMS (3).

27. Un système de commande (1) selon la Revendication 26 dans lequel la pluralité d'unités de technique de commande intelligente (23) comprend deux unités ou plus parmi une unité à logique floue, une unité à algorithme génétique et une unité à réseau neuronal.

28. Un système de commande (1) selon la Revendication 26 ou 27 dans lequel le moyen de détermination de la précision de chacune des unités de technique de commande intelligente (23) comprend un moyen de comparaison de l'ensemble actuel d'entrées à des entrées d'historique conservées en mémoire dans la base de données (13) et de détermination de celle des unités de technique de commande intelligente qui était la plus précise sur le plan de l'historique.

29. Un système de commande (1) selon l'une quelconque des Revendications 26 à 28 dans lequel le moyen de processeur noyau (17) de détermination d'une entrée de commande appropriée pour le BMS comprend en outre un décideur adaptatif (41).

30. Un système de commande (1) selon la Revendication 29 dans lequel le décideur adaptatif (41) possède un moyen de détermination de l'entrée de commande BMS proposée la plus précise reçue des unités de technique de commande intelligente (23) et d'utilisation de cette entrée de commande comme entrée de commande appropriée pour le BMS (3).

31. Un système de commande (1) selon la Revendication 29 dans lequel le décideur adaptatif (41) possède un moyen de détermination de la précision de chacune des entrées de commande BMS proposées reçues des unités de technique de commande intelligente (23) et de génération d'une entrée de commande appropriée pour le BMS (3) en fonction d'une moyenne pondérée des entrées de commande proposées du BMS.

32. Un système de commande (1) selon la Revendication 31 dans lequel le processeur noyau (17) possède une unité de pré-traitement de données (25) destinée à classer chacune des unités de technique de commande intelligente (23) périodiquement, fournissant ainsi une valeur pondérée à cette unité de technique de commande intelligente.

33. Un système de commande (1) selon l'une quelconque des Revendications 29 à 32 dans lequel le processeur noyau (17) est équipé d'une pluralité de décideurs adaptatifs (43(a), 43(b), 43(c), 43 (d)) agencés en cascade.

34. Un système de commande (1) selon la Revendication 33 dans lequel la sortie de l'un des décideurs adaptatifs (43(a), 43(b), 43(c), 43(d)) est envoyée sous la forme d'une entrée à un autre des décideurs adaptatifs (43 (a), 43 (b), 43 (c), 43 (d)).

35. Un programme informatique contenant des instructions de programme destinées à amener un ordinateur à exécuter le procédé selon l'une quelconque des Revendications 1 à 25.
